# EUROPÄISCHE PATENTSCHRIFT

(11) **EP 0 499 674 B1**
(45) Veröffentlichungstag und Bekanntmachung des Hinweises auf die Patenterteilung: **11.12.1996**
(21) Anmeldenummer: 91102556.7
(22) Anmeldetag: 21.02.1991
(51) Int. Cl.: H04M 1/03

(54) **Anordnung zur Unterdrückung von akustischen Reflexionen bei Handapparaten der Fernsprechtechnik**
Means for suppression of acoustic reflexions in handsets for telephony
Dispositif pour la suppression des réflexions acoustiques dans les combinés téléphoniques

(43) Veröffentlichungstag der Anmeldung: 26.08.1992
(73) Patentinhaber: SIEMENS AKTIENGESELLSCHAFT, 80333 München (DE)
(72) Erfinder: Andert, Tomas Jan, Dr.-Ing., W-4290 Bocholt (DE); Pieper, Stefan, Dipl.-Ing., W-4358 Haltern (DE)

(56) Entgegenhaltungen:
- EP-A- 0 297 023
- DE-A- 3 542 490
- DE-B- 2 453 185
- DE-U- 8 816 291
- GB-A- 2 187 062
- LU-A- 82 607
- US-A- 2 190 466
- US-A- 2 190 467
- PATENT ABSTRACTS OF JAPAN vol. 5, no. 86 (E-60)(758) 5. Juni 1981 & JP-A- 56 32 863

## Beschreibung

Die Erfindung beinhaltet einen Handapparat der Fernsprechtechnik, bei dem zur Unterdrückung von Reflexionen (im Bereich von etwa 2 bis 3 kHz) zusätzliche Resonatoren im Bereich der im Handapparat angeordneten elektroakustischen Wandler vorgesehen sind, wobei die Resonatoren über an der Handapparateunterschale vorgesehene Ankopplungsöffnungen und sich daran anschließende Volumina gebildet sind.

Für eine einwandfreie Kommunikation zwischen zwei Telefonpartnern ist es wichtig, daß ein Fernsprechgerät möglichst wenig vom ankommenden Signal reflektiert. Reflexionen entstehen nicht nur im Bereich der Fernsprechgeräteschaltung, sondern auch im Bereich des Handapparates. Insbesondere wird von der Sprechkapsel das akustische Signal der Hörkapsel empfangen und wieder auf die Fernsprechleitung übertragen. Der Telefonbenutzer hat dann den Eindruck von Reflexionen, Halligkeit und Echos.

Die Beurteilung der Eigenschaften eines Fernsprechgerätes von der Netzseite aus wird z. B. durch die Messung der Rückflußdämpfung auf einer harten Unterlage ermöglicht. Bei dieser Messung liegt der Handapparat des Fernsprechgerätes mit den Schalldurchlaßöffnungen nach unten auf der genannten harten Unterlage. Von dieser Unterlage wird der Schall reflektiert und besonders gut von der Hör- zur Sprechkapsel geleitet. Dabei werden von der Hörkapsel insbesondere hohe Frequenzen abgestrahlt. Diese hohen Frequenzen werden reflektiert und von der Sprechkapsel empfangen.

Dies ist vorzugsweise bei modernen Sprechkapseln mit hoher Empfindlichkeit störend. Versuche haben ergeben, daß sich insbesondere eine Frequenz um 3 kHz störend bemerkbar macht.

Dazu tragen im wesentlichen die Abmessungen des Handapparates bei. Unter dem Bogen zwischen dem Handapparat und der Unterlage entsteht ein λ-Resonator, der allen handelsüblichen Handapparatkörpern gemeinsam ist.

Durch die Druckschrift DE-A-35 42 490 ist ein Handapparat bekannt, bei dem zur Unterdrückung von Reflexionen unterhalb der Hörkapsel zumindest ein Hohlraum angeordnet ist, der mit Bohrungen oder Schlitzen einen akustischen Resonator bildet, der dem verkoppelten Schall feld zwischen der Hörkapsel und der Sprechkapsel zugeordnet ist.

Durch die Druckschrift US-A-2,190,467 ist es weiterhin bekannt, in dem zwischen den die Wandlerkapsel aufnehmenden Bereichen befindlichen Griffbereich des Handapparates Resonatoren vorzusehen. Diese Resonatoren werden durch geschlossene Hohlräume im Griffteil sowie durch entsprechende, den Hohlräumen zugeordnete Ankopplungsöffnungen gebildet.

Aufgabe der vorliegenden Erfindung ist es, bei neuzeitlichen Handapparaten weitere Möglichkeiten aufzuzeigen, durch die unerwünschte Reflexionen unterdrückt werden können.

Gemäß einer ersten Ausführungsform der Erfindung erfolgt eine Unterdrückung der unerwünschten Reflexionen dadurch, daß die Ankopplungsöffnungen durch zusätzliche Schalldurchlaßöffnungen im Bereich der Ein- und Ausspracheöffnungen der Wandler und die Resonatoren durch ein zwischen der Wandlerkapsel und der Innenfläche der Unterschale des Handapparates eingebrachtes und mit Ausnehmungen versehenes Einlageteil gebildet sind.

Da das Einlegeteil mit Ausnehmungen versehen ist und diese in Verbindung mit der Innenfläche des Handapparateunterteils im zusammengebauten Zustand des Handapparates Resonatoren bildet, ist der große Vorteil einer derartigen Anordnung darin zu sehen, daß in bestimmten Grenzen unabhängig vom konstruktiven Aufbau des Handapparates Resonatorräume geschaffen werden können. Hierbei können freiliegende Flächen des Handapparatekörpers genutzt werden.

Es ist aber auch denkbar, daß das Einlegeteil einen verminderten Querschnitt in der Handapparateschale abdeckt.

Gemäß einer bevorzugten Ausführungsform kann die Wandlerkapsel in ihrem der Innenwandung des Handapparates zugewandten Bereich zwei umlaufende akustisch dicht an der Innenseite anliegende Wülste aufweisen, wobei die erste außenliegende Wulst durchlaufend gestaltet ist und die zweite innen verlaufende Wulst abschnittsweise unterbrochen ist, und daß die unterbrochenen Bereiche als Ankopplungsöffnungen für die zwischen den Wülsten gebildeten Resonatorräume dienen, wobei wiederum die Ankopplungsöffnungen mit dem zwischen der Wandlerkapsel und den Schalldurchlaßöffnungen gebildeten Schallweg verbunden sind. Auch bei dieser Ausführungsform sind die zusätzlichen Resonatoren im Bereich des Handapparatekörpers vorgesehen. Diese Anordnung hat den großen Vorteil, daß keine baulichen Veränderungen in Form von Schlitzen, Stegen oder dergleichen am Handapparatekörper vorgesehen werden müssen. In diesem Fall müssen zur Erzielung der gewünschten Unterdrückung von Reflexionen geringfügige bauliche Veränderungen an dem Wandler selbst vorgenommen werden, der im Zusammenwirken mit der Innenfläche des Handapparates die gewünschten Resonatorräume bildet.

Die Erfindung soll im folgenden anhand von mehreren Ausführungsbeispielen erläutert werden.

Es zeigt
Figur 1 einen Handapparat für ein Fernsprechgerät mit einem Resonator im Bereich der Hörkapsel in einer teilweise geschnittenen Seitenansicht,
Figur 2 einen Teil eines Handapparates mit einem bekannten Resonator im Einsprachebereich in einer geschnittenen Seitenansicht,
Figur 3 eine Aufsicht auf die bekannte Ausführungsform nach Figur 2,
Figur 4 eine Aufsicht auf einen Teil des Handapparates im Bereich der Hörkapsel mit Schalldurchlaß- und Resonatoröffnungen,
Figur 5 eine geschnittene Seitenansicht der Anordnung nach Figur 4,
Figur 6 eine bekannte Ankopplung von Resonatoren über Schalldurchlaßöffnungen im Hörbereich des teilweise dargestellten Handapparates,
Figur 7 einen Teil des Handapparates im Bereich der Hörkapsel mit einem über eine Öffnung angekoppelten Resonator in einer geschnittenen Seitenansicht,
Figur 8 einen Teil eines Handapparates im Bereich der Hörkapsel mit einem einen Resonator bildenden Einlegeteil in einer geschnittenen Seitenansicht,
Figur 9 einen Teil eines Handapparates im Bereich der Hörkapsel mit einer im Wandler eingearbeiteten und Resonatoren bildenden Abdeckung in einer geschnittenen Seitenansicht,
Figur 10 eine Aufsicht auf die Abdeckung des Wandlers nach Figur 9,
Figur 11 eine geschnittene Seitenansicht der Abdeckung nach Figur 10 längs der Schnittlinie XI-XI.

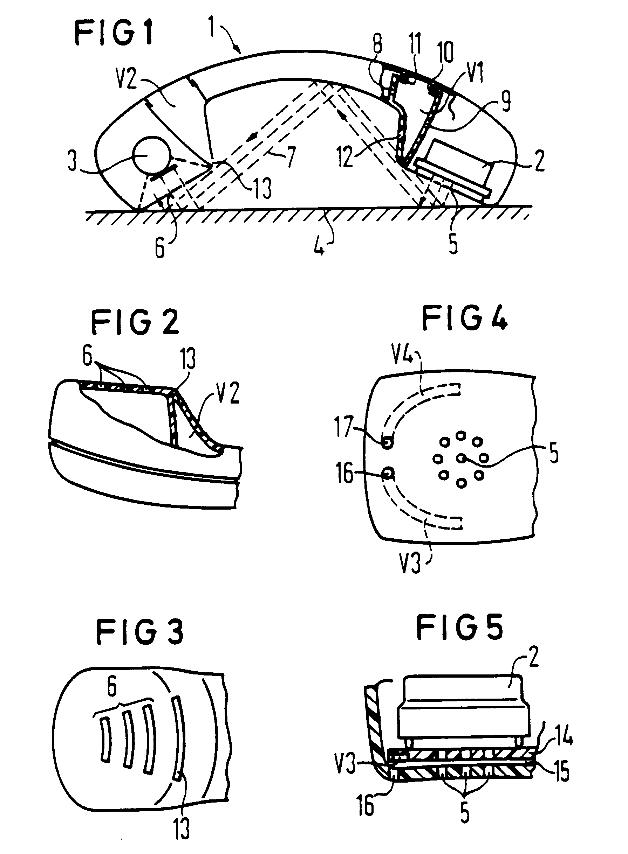

Die Figur 1 zeigt einen teilweise geschnittenen Handapparate 1 mit einer Hörkapsel 2 und einer Sprechkapsel 3. Die Beurteilung der Eigenschaften eines Fernsprechgerätes von der Netzseite aus ermöglicht z. B. die Messung der Rückflußdämpfung auf einer harten Platte 4. Bei dieser Messung liegt der Handapparat 1 mit den Schalldurchlaßöffnungen 5 und 6 auf der Platte 4 auf. Von der Platte 4 wird der Schall (gestrichelte Linien 7 mit Pfeilen) von der Hörkapsel 2 zu der Sprechkapsel 3 reflektiert. Dabei werden von der Hörkapsel 2 hohe Frequenzen (2 bis 3 kHz) besonders gut abgestrahlt. Sie werden auch besser reflektiert und von der Sprechkapsel 3 mit größerer Empfindlichkeit empfangen. Dies führt dazu, daß sich z. B. bei einer Frequenz um 3 kHz eine Resonanz ausbildet. Unter dem Bogen des Handapparates 1 entsteht ein Lambda-Resonator.

Um diese Resonanz zu bedämpfen, zeigt die Figur 1 einen im Bereich der Hörkapsel 2 angeordneten Resonator. Dieser Resonator wird gebildet von einem durch Stege 8, 9, 10 und 11 begrenzten Volumen V1, das über eine Ankopplungsöffnung 12 mit dem den Handapparat umgebenden Raum angekoppelt ist. Dabei kann die Ankopplungsöffnung 12 zugleich als Aufhängeöffnung für den Handapparat 1 der Fernsprechstation bei deren Wandbetrieb verwendet werden.

Figur 2 und 3 zeigen die Anordnung eines Resonators im Einsprachebereich. Neben den normalen Schalldurchlaßöffnungen 6 ist eine weitere schlitzartige Ankopplungsöffnung 13 vorgesehen, über die das Volumen V2 an den den Handapparat umgebenden Raum angekoppelt ist.

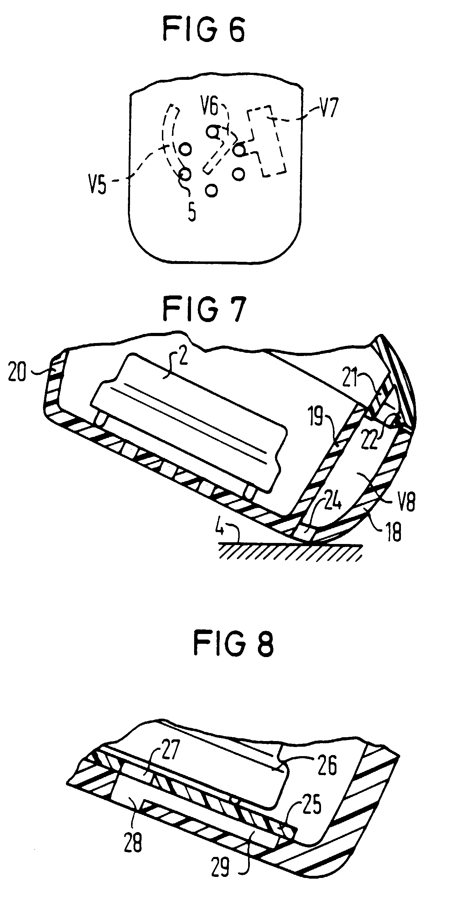

Die Figuren 4 und 5 zeigen die Ankopplung eines im Handapparat 1 zwischen der Hörkapsel 2 und der Innenwandung 15 des Handapparates eingebrachten und Resonatoren bildenden Einlegeteils 14. Wie aus diesen Figuren ersichtlich ist, werden durch Zusammenfügen der beiden Teile 14 und 15 Volumina V3 und V4 gebildet, die zusammen mit zusätzlichen Ankopplungsöffnungen 16 und 17 die Resonatoren bilden. Dabei bildet das Volumen V3 zusammen mit der Ankopplungsöffnung 16 einen λ/4-Resonator für 3 kHz, während das Volumen V4 zusammen mit der Ankopplungsöffnung 17 einen λ/4-Resonator für 2,5 kHz bildet.

In Figur 6 ist die Ankopplung von verschiedenen Resonatoren direkt über die Schalldurchlaßöffnungen 5 der Hörkapsel dargestellt. Je nach Gestaltung des Einlegeteils nach Figur 5 können verschiedene Formen und Volumina V5, V6 und V7 der Resonatoren gebildet werden.

Figur 7 zeigt die stehende Anordnung eines λ/4-Resonators im Bereich der Hörkapsel 2. Dieser Resonator wird gebildet durch die das Volumen V8 begrenzende Wand 18 und einen Steg 19 am Handapparateunterteil 20 sowie durch ihnen zugeordnete Ansätze 21 und 22 des Handapparateoberteils 23. Das Volumen V8 ist über die Ankopplungsöffnung 24 mit dem den Handapparat umgebenden Raum angekoppelt. Diese Anordnung des Resonators erfordert eine Bauhöhe von etwa 3 cm und ist daher nur für Handapparatekörper mit größeren Abmessungen geeignet.

Figur 8 stellt einen Teil des Handapparates 1 mit einem einen Resonator bildenden Einlegeteil 25 dar. Die Hörkapsel 26 ist über die Schalldurchlaßöffnung 27 des Einlegeteils 25 sowie die Schalldurchlaßöffnung 28 des Handapprateunterteils mit dem Außenraum akustisch verbunden. Diese beiden Öffnungen 27 und 28 bilden den Schallweg zum Wandler. Das Einlegeteil 25 liegt dabei akustisch dicht an einem teilweise verringerten Querschnitt 29 des Hörbereiches des Handapparates an. Die Schalldurchlaßöffnung 28 bildet zusammen mit dem verjüngten Querschnitt 29 einen Resonator.

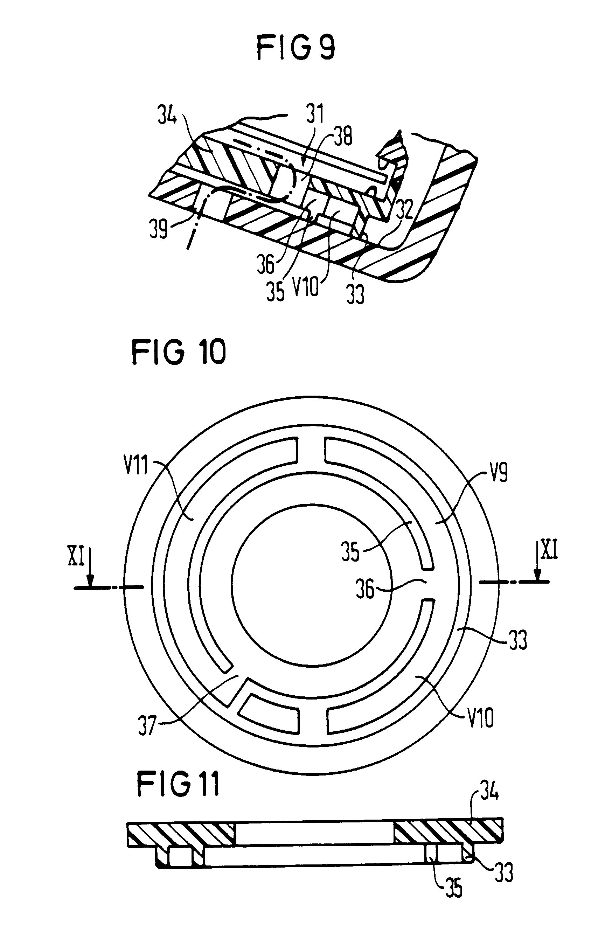

Eine weitere Anordnung von zusätzlichen Resonatoren zeigen die Figuren 9, 10 und 11. Im Bereich des Handapparateunterteils 30 liegt eine Wandlerkapsel 31 akustisch dicht an dessen Innenwandung 32 an. Dies wird erreicht durch eine erste umlaufende Wulst 33 der Abdeckung 34 der Wandlerkapsel 31. Eine weitere innen liegende und teilweise unterbrochene Wulst 35 liegt ebenfalls an der Innenwandung 32 des Unterteils 30 akustisch dicht an und bildet mit der Wulst 33 und der Innenwandung des Handapparateunterteils die nachstehend beschriebenen Resonatoren. Wie insbesondere aus Figur 10 zu erkennen ist, werden über die Ankopplungsöffnung 36 und die Volumina V9 und V10 zwei Resonatoren gebildet. Durch eine weitere Ankopplungsöffnung 37 und das Volumen V11 wird ein weiterer Resonator gebildet, der aufgrund seiner geometrischen Abmessungen auf eine andere Frequenz abgestimmt ist. Wie aus Figur 9 ersichtlich ist, wird der Schallweg zur Wandlerkapsel durch die Schalldurchlaßöffnung 38 der Abdeckung 34 sowie durch die Schalldurchlaßöffnung 39 des Handapparateunterteils 30 gebildet. Die Ankopplungsöffnungen 36 und 37 liegen im Bereich des Schallweges, so daß gleichzeitig der Schallweg zur Ankopplung der Resonatoren verwendet wird.

## Patentansprüche

1. Handapparat der Fernsprechtechnik, bei dem zur Unterdrükkung von Reflexionen (im Bereich von etwa 2 bis 3 kHz) zusätzliche Resonatoren im Bereich der im Handapparat angeordneten elektroakustischen Wandler (2, 3) vorgesehen sind, wobei die Resonatoren über an der Handapparateunterschale vorgesehene Ankopplungsöffnungen (12, 13, 16, 17, 24) und sich daran anschließende Volumina (V1, V2, V3, V4, V8) gebildet sind, **dadurch gekennzeichnet,** daß die Ankopplungsöffnungen (16, 17) durch zusätzliche Schalldurchlaßöffnungen im Bereich der Ein- und Ausspracheöffnungen der Wandler (2) und die Resonatoren durch ein zwischen der Wandlerkapsel (2) und der Innenfläche der Unterschale des Handapparates (1) eingebrachtes und mit Ausnehmungen versehenes Einlegeteil (14) gebildet sind (Figuren 4 und 5).

2. Handapparat nach Anspruch 1, **dadurch gekennzeichnet,** daß das Einlegeteil (25) einen verminderten Querschnitt (29) in der Handapparateunterschale abdeckt (Figur 8).

3. Handapparat nach Anspruch 1, **dadurch gekennzeichnet**, daß die Wandlerkapsel (31) an ihrem der Innenwandung (32) des Handapparates (1) zugewandten Bereich zwei umlaufende akustisch dicht an der Innenseite (32) anliegende Wülste (33, 35) aufweist, wobei die erste außen liegende Wulst (33) durchlaufend gestaltet und die zweite innen verlaufende Wulst (35) abschnittsweise unterbrochen ist, und daß die unterbrochenen Bereiche als Ankopplungsöffnungen (36, 37) für die zwischen den Wülsten gebildeten Resonatorräume dienen, wobei weiterhin die Ankopplungsöffnungen (36, 37) mit dem zwischen Wandlerkapsel (31) und Schalldurchlaßöffnungen (38, 39) gebildeten Schallweg verbunden sind (Figuren 9, 10, 11).

## Claims

1. Handset in telephone engineering, in which in order to suppress reflections (in the range of about 2 to 3 kHz) additional resonators are provided in the region of the electroacoustic transducers (2, 3) arranged in the handset, the resonators being formed by coupling openings (12, 13, 16, 17, 24) provided on the lower handset shell and volumes (Vl, V2, V3, V4, V8) adjoining said openings, characterized in that the coupling openings (16, 17) are formed by additional sound passage openings in the region of the acoustic inlets and outlets of the transducers (2), and the resonators are formed by an insert (14) introduced between the transducer casing (2) and the inner surface of the lower shell of the handset (1) and provided with cutouts (Figures 4 and 5).

2. Handset according to Claim 1, characterized in that the insert (25) covers a reduced cross-section (29) in the lower handset shell (Figure 8).

3. Handset according to Claim 1, characterized in that on its region facing the inner wall (32) of the handset (1), the transducer casing (31) has two circumferential beads (33, 35) bearing against the inner side (32) in a soundproof fashion, the first bead (33), situated on the outside, being configured continuously, and the second bead (35), extending in the inside, being interrupted in sections, and in that the interrupted regions serve as coupling openings (36, 37) for the resonator spaces formed between the beads, it being the case, furthermore, that the coupling openings (36, 37) are connected to the sound path formed between the transducer casing (31) and sound passage openings (38, 39) (Figures 9, 10, 11).

## Revendications

1. Combiné de la technique téléphonique, dans lequel, pour supprimer des réflexions (dans un domaine d'environ 2 à 3 kHz), des résonateurs supplémentaires sont prévus dans la zone des transducteurs (2, 3) électroacoustiques montés dans le combiné, les résonateurs étant formés par l'intermédiaire d'ouvertures (12, 13, 16, 17, 24) de couplage prévues sur la coquille inférieure du combiné et par l'intermédiaire de volumes (V1, V2, V3, V4, V8) qui y font suite, caractérisé en ce que les ouvertures (16, 17) de couplage sont formées par des ouvertures supplémentaires de passage du son ménagées dans la région des ouvertures d'entrée et de sortie des transducteurs (2) et les résonateurs par une pièce (14) d'insert munie d'évidements et insérée entre la capsule (2) de transducteur et la face intérieure de la coquille inférieure du combiné (1) (figures 4 et 5).

2. Combiné suivant la revendication 1, caractérisé en ce que la pièce (25) d'insert recouvre une section (29) transversale réduite de la coquille inférieure du combiné (figure 8).

3. Combiné suivant la revendication 1, caractérisé en ce que la capsule (31) de transducteur comporte dans sa zone tournée vers la paroi (32) intérieure du combiné (1) deux bourrelets (33, 35) faisant le tour, s'appliquant de manière étanche du point de vue acoustique à la face (32) intérieure, le premier bourrelet (33) se trouvant à l'extérieur étant agencé en continu et le deuxième bourrelet (35) qui s'étend intérieurement étant interrompu par tronçon, et en ce que les zones interrompues servent d'ouvertures (36, 37) de couplage pour les cavités de résonateur formées entre les bourrelets, les ouvertures (36, 37) de couplage communiquant à leur tour avec la voie de propagation du son formée entre la capsule (31) de transducteur et les ouvertures (38, 39) de passage du son (figures 9, 10, 11).
